# EUROPÄISCHE PATENTSCHRIFT

(11) **EP 3 165 800 B1**
(45) Veröffentlichungstag und Bekanntmachung des Hinweises auf die Patenterteilung: **13.06.2018**
(21) Anmeldenummer: 16194376.6
(22) Anmeldetag: 18.10.2016
(51) Int. Cl.: F16K 17/196

(54) **DRUCKAUSGLEICHSEINRICHTUNG**
PRESSURE EQUALISING DEVICE
DISPOSITIF DE COMPENSATION DE PRESSION

(30) Priorität: 03.11.2015 DE 102015221508
(43) Veröffentlichungstag der Anmeldung: 10.05.2017
(73) Patentinhaber: Filtration Group GmbH, 74613 Öhringen (DE)
(72) Erfinder: Gröner, Alfred, 74613 Öhringen (DE); Haj Hassine, Atef, 74613 Öhringen (DE); Kugel, Wolfgang, 74549 Wolpertshausen (DE)
(74) Vertreter: BRP Renaud & Partner mbB Rechtsanwälte Patentanwälte Steuerberater

(56) Entgegenhaltungen:
- WO-A1-2009/143310
- CN-U- 202 520 671
- DE-A1- 2 141 619
- DE-A1-102012 202 275

## Beschreibung

Die vorliegende Erfindung betrifft eine Druckausgleichseinrichtung zum pneumatischen Druckausgleich eines Hydrauliktanks. Die Erfindung betrifft außerdem einen mit wenigstens einer solchen Druckausgleichseinrichtung ausgestatteten Hydrauliktank.

Bei einer Vielzahl industrieller Anwendungen dienen Hydrauliktanks zur Bevorratung von Hydraulikmitteln, wie z.B. Hydrauliköl, Kühlstoffe, Schmierstoffe, Reinigungsmittel. Das jeweilige Hydraulikmittel kann dabei in einem industriellen Prozess zur Anwendung kommen, wobei je nach Bedarf Hydraulikmittel aus dem Hydrauliktank dem Prozess zugeführt wird oder aus dem Prozess in den Hydrauliktank zurückgeführt wird. Somit kommt es regelmäßig dazu, dass sich das Volumen des Hydraulikmittels im Hydrauliktank ändert, was mit einer entsprechenden Volumenänderung für die Luft im Hydrauliktank einhergeht. Damit sich dabei der Druck im Hydrauliktank nicht ändert, ist der Hydrauliktank üblicher Weise mit wenigstens einer Druckausgleichsöffnung ausgestattet, durch die das Luftvolumen des Hydrauliktanks mit einer Umgebung des Hydrauliktanks fluidisch verbunden ist. In der Regel ist eine derartige Druckausgleichsöffnung im montierten Zustand des Hydrauliktanks an einer Oberseite des Hydrauliktanks angeordnet.

Um nun zu verhindern, dass aufgrund der Be- und Entlüftung des Hydrauliktanks durch die jeweilige Druckausgleichsöffnung Verunreinigungen, die in der Luft mitgeführt sind, wie z.B. Staub von Blüten, Ruß und sonstigen Festkörper, in das Hydraulikmittel gelangen, kann die jeweilige Druckausgleichsöffnung mit einer Druckausgleichseinrichtung der eingangs genannten Art ausgestattet werden, die ein Ringfilterelement umfasst, durch das hindurch die Belüftung bzw. Entlüftung des Hydrauliktanks erfolgt. Insoweit kann eine solche Druckausgleichseinrichtung auch als Be- und Entlüftungseinrichtung bzw. als Be- und Entlüftungsfiltereinrichtung bezeichnet werden. Somit kann beim Belüften des Hydrauliktanks die dem Luftvolumen des Hydrauliktanks zugeführte Luft gereinigt werden. Gleichzeitig kann beim Entlüften des Hydrauliktanks die aus dem Luftvolumen austretende Luft von Nebel und Dämpfen des Hydraulikmittels gereinigt werden, wodurch gleichzeitig eine unerwünschte Emission des Hydraulikmittels in die Umgebung unterbunden bzw. reduziert werden kann.

Aus der DE 10 2012 202 275 A1 ist eine gattungsgemäße Druckausgleichseinrichtung zum pneumatischen Druckausgleich eines Hydrauliktanks bekannt.

Aus der DE 2 141 619 A ist ein kombinierter Verschluss- und Belüftungsdeckel für eine Hydraulikflüssigkeitsbehälter bekannt, der Befestigungsmittel zum lösbaren Befestigen des Deckels am Hydraulikflüssigkeitsbehälter umfasst und einen Luftströmungsweg vorsieht, der einen Abschnitt umfasst, der in direkter Verbindung mit der Atmosphäre steht. In diesem Luftströmungsweg ist dabei ein Überdruckventil angeordnet, welches den Behälter durch den Deckel zur Atmosphäre entlüftet, sobald der Druck in dem Behälter einen vorher eingestellten Wert überschreitet. In gleicher Weise ist auch ein Einlassventil vorgesehen, das atmosphärische Luft in den Behälter einströmen lässt, sobald der Druck in dem Behälter bis unter einen vorher definierten Wert zurückgeht.

Aus der CN 202 520 671 U ist eine Druckausgleichseinrichtung mit einem Filter bekannt.

Insbesondere beim Abbau von Überdruck in einem Hydrauliktank werden aerosol mitgeführte Hydraulikmitteltröpfchen bzw. Hydraulikölnebel in ein Ringfilterelement der Druckausgleichseinrichtung eingetragen und führen dort zu einer Verschlechterung der Filterleistung, sofern sie nicht über einen Coaleszer bzw. ein coaleszierendes Filtermaterial abgeschieden werden. Auch bei am Ringfilterelement abgeschiedenem Hydraulikmittel bzw. Hydrauliköl kann es je nach Menge zu einer Verschlechterung der Filterleistung oder aber zu einem unerwünschten Austrag des abgeschiedenen Hydraulikmittels bzw. Hydrauliköls beim Austausch der Druckausgleichseinrichtung kommen. Zudem steht das abgeschiedene Hydraulikmittel nicht mehr im Hydraulikmittelkreislauf zur Verfügung und muss nachgefüllt werden.

Die vorliegende Erfindung beschäftigt sich daher mit dem Problem, für eine Druckausgleichseinrichtung der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, in einer Druckausgleichseinrichtung zum pneumatischen Druckausgleich eines Hydrauliktanks nicht nur den eigentlichen Druckausgleich vorzunehmen, sondern zusätzlich auch aerosol mitgeführtes Hydraulikmittel bzw. Hydrauliköl oder Hydraulikmitteltröpfchen aufzufangen, abzuscheiden und dem Hydrauliktank wieder zuzuführen, so dass es einer weiteren Verwendung zur Verfügung steht. Die erfindungsgemäße Druckausgleichseinrichtung besitzt dabei ein Gehäuse mit einer Konsole und einem topfförmigen Deckel, wobei in dem Gehäuse ein Ringfilterelement mit einer unteren und einer oberen Endscheibe sowie einem dazwischen angeordneten Filtermaterial angeordnet ist. Erfindungsgemäß weist nun die Konsole einen zentralen Verbindungskanal auf, der kommunizierend mit dem Hydrauliktank, insbesondere über eine an diesem angeordnete Druckausgleichsöffnung, verbindbar ist. Im Bereich des Verbindungskanals ist dabei ein Druckausgleichsventil vorgesehen, welches zumindest bei definiertem Überdruck in eine Auslassöffnung, das heißt im Hydrauliktank nach außen in die Umgebung, öffnet. Das Druckausgleichsventil weist einen gegen einen zugehörigen, konsolenseitigen Ventilsitz vorgespannten Ventilteller mit einem zentral angeordneten Ventilkörper auf, der insbesondere schwerkraftbedingt oder bedingt durch Druckdifferenzen in eine Einlassrichtung, das heißt von der Umgebung hin zum Hydrauliktank öffnet und bei definiertem Überdruck in Auslassrichtung schließt. Dieser Ventilkörper ist dabei über Kragarme an einem hochgezogenen Rand am Ventilteller gehalten, wobei dieser hochgezogene Rand den Verbindungskanal ringförmig umgibt. In diesem Rand sind nun Öffnungen vorgesehen, die einen Rückfluss von an dem Ringfilterelement abgeschiedenem Hydraulikmittel über den Verbindungskanal in den Hydrauliktank ermöglichen. Das Ringfilterelement selbst besitzt einen Coaleszer bzw. ein coaleszierend ausgebildetes Filtermaterial und ist dadurch zur Abscheidung von aerosol mitgeführtem Hydraulikmittel ausgebildet. Die untere Endscheibe des Ringfilterelements weist einen hochgezogenen Außenrand und einen im Vergleich dazu niedrigeren, hochgezogenen Innenrand auf, so dass ein Pegel an abgeschiedenem Hydraulikmittel nie höher als der hochgezogene Innenrand stehen kann, da er ansonsten über den Innenrand und die im Rand am Ventilteller vorgesehenen Öffnungen über den Verbindungskanal in den Hydrauliktank zurückfließt. Mit der erfindungsgemäßen Druckausgleichseinrichtung ist es somit nicht nur möglich, einen Druckausgleich in einem zugehörigen Hydrauliktank einfach zu realisieren, sondern zusätzlich das bspw. beim Abbau von einem Überdruck aerosol mitgeführte Hydraulikmittel aufzufangen, abzuscheiden und in den Hydrauliktank zurückzuleiten. Hierdurch kann insbesondere eine Kontamination der Umgebung mit Hydraulikmittel bzw. Hydrauliköl zuverlässig vermieden und dieses darüber hinaus dem Hydraulikkreislauf wieder zur Verfügung gestellt werden, wodurch Ressourcen geschont werden.

Bei einer vorteilhaften Weiterbildung der erfindungsgemäßen Lösung ist eine Federeinrichtung, bspw. eine Schraubenfeder vorgesehen, die sich einen Ends am Deckel und anderen Ends am Ventilteller abstützt und diesen gegen den konsolenseitigen Ventilsitz vorspannt. Bei der Ausbildung der Federeinrichtung als Schraubenfeder kann diese nicht nur kostengünstig, sondern auch langfristig zuverlässig ausgebildet werden, wobei die Schraubenfeder zur sicheren Positionierung den Rand am Ventilteller umgreift und in ähnlicher Weise durch ringförmig angeordnete Elemente am Deckel positioniert bzw. fixiert ist.

Bei einer vorteilhaften Weiterbildung der erfindungsgemäßen Lösung weist der Verbindungskanal einen trichterförmigen Abschnitt sowie ein sich daran anschließenden rohrförmigen Abschnitt auf. Der trichterförmige Abschnitt geht an seinem oberen Rand in den Ventilsitz über, wobei der Ventilsitz bspw. durch eine entsprechende ringförmige Dichtung gebildet werden kann.

Bei einer vorteilhaften Weiterbildung der erfindungsgemäßen Lösung ist außen am Verbindungskanal ein Außengewinde angeordnet, welches eine einfache Montage, nämlich durch ein Eindrehen in ein am Hydrauliktank angeordnetes und komplementär zu diesem Außengewinde ausgebildetes Innengewinde ermöglicht. Hierdurch ist insbesondere sowohl eine einfache Montage als auch Demontage der Druckausgleichseinrichtung möglich, ohne dass hierfür separate Befestigungsmittel, wie bspw. Schrauben, eingesetzt werden müssten.

Die vorliegende Erfindung beruht weiter auf dem allgemeinen Gedanken, einen Hydrauliktank zur Bevorratung einer Flüssigkeit, bspw. Hydraulikmittel, mit zumindest einer Druckausgleichsöffnung anzugeben, die in einem Gehäuse des Hydrauliktanks ausgebildet ist, üblicherweise an einer Oberseite. Darüber hinaus weist der erfindungsgemäße Hydrauliktank wenigstens eine zuvor beschriebene Druckausgleichseinrichtung auf, die mit der zuvor genannten Druckausgleichsöffnung kommunizierend in Verbindung steht. Ein mit einer solchen Druckausgleichseinrichtung ausgestatteter Hydrauliktank erlaubt nicht nur einen umweitfreundlichen, sondern zudem auch einen ressourcenschonenden Betrieb eines Hydrauliksystems.

Bei einer vorteilhaften Weiterbildung der erfindungsgemäßen Lösung ist an der Druckausgleichsöffnung ein komplementär zum Außengewinde der Druckausgleichseinrichtung ausgebildetes Innengewinde angeordnet, so dass die Druckausgleichseinrichtung vergleichsweise einfach, nämlich durch ein einfaches An- bzw. Abschrauben am Hydrauliktank montiert bzw. demontiert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Schnittdarstellung durch eine erfindungsgemäße Druckausgleichseinrichtung an einem Hydrauliktank,
- Fig. 2: eine Ansicht auf einen erfindungsgemäßen Ventilteller mit Öffnungen.

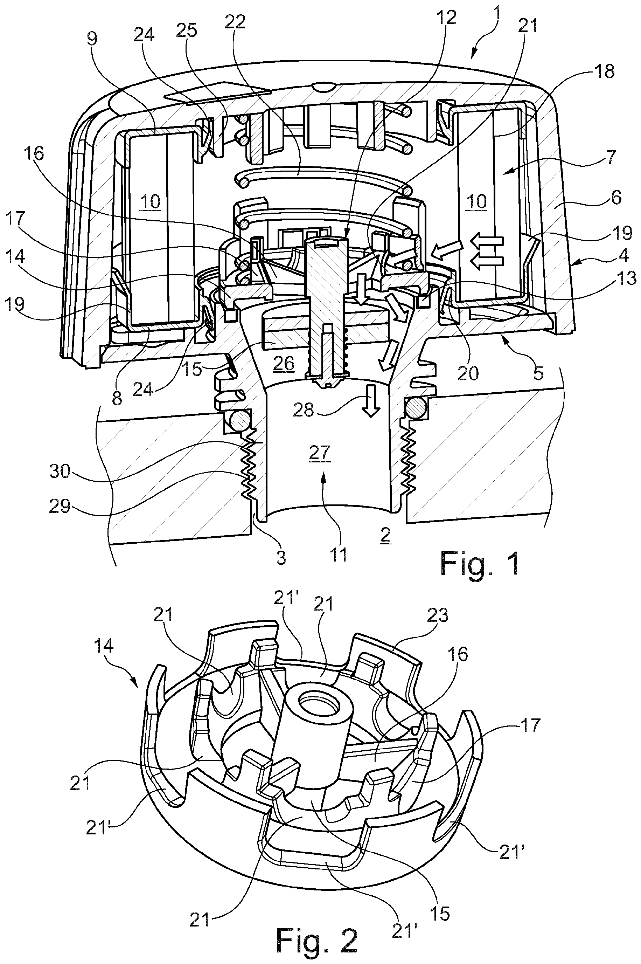

Entsprechend der Fig. 1, ist eine erfindungsgemäße Druckausgleichseinrichtung 1 zum pneumatischen Druckausgleich eines Hydrauliktanks 2 in einer Druckausgleichsöffnung 3 des Hydrauliktanks 2 eingeschraubt. Die erfindungsgemäße Druckausgleichseinrichtung 1 besitzt dabei ein Gehäuse 4, welches sich aus einer Konsole 5 und einem damit verbundenen, topfförmigen Deckel 6 zusammengesetzt. In dem Gehäuse 4 ist dabei ein Ringfilterelement 7 mit einer unteren Endscheibe 8 und einer oberen Endscheibe 9 angeordnet, welches im Betriebszustand der Druckausgleichseinrichtung 1 in Radialrichtung durchströmt ist. Zwischen der unteren Endscheibe 8 und der oberen Endscheibe 9 ist dabei ein Filtermaterial 10 angeordnet, welches durch die beiden Endscheiben 8, 9 stirnseitig begrenzt ist. Die Konsole 5 besitzt einen zentralen Verbindungskanal 11, der kommunizierend mit der Druckausgleichsöffnung 3 des Hydrauliktanks 2 verbindbar und im gezeichneten Fall auch verbunden ist.

Im Bereich des Verbindungskanals 11 ist dabei erfindungsgemäß ein in beide Richtungen durchgängiges Druckausgleichsventil 12 vorgesehen, welches zumindest bei definiertem Überdruck im Hydrauliktank 2 in eine Auslassrichtung, das heißt vom Hydrauliktank 2 nach außen in die Umgebung, öffnet. Das Druckausgleichsventil 12 weist dabei einen gegen einen zugehörigen, konsolenseitigen Ventilsitz 13 vorgespannten Ventilteller 14 mit einem zentral angeordneten Ventilkörper 15 auf, wobei der Ventilkörper 15 bspw. schwerkraftbedingt oder ebenfalls federvorgespannt in eine Einlassrichtung, das heißt von der Umgebung in ein Inneres des Hydrauliktanks 2 öffnet und bei definiertem Überdruck in die entgegengesetzte Auslassrichtung schließt. Der Ventilkörper 15 ist dabei über Kragarme 16 an einem hochgezogenen Rand 17 am Ventilteller 14 gehalten (vgl. auch Fig. 2). Das Ringfilterelement 7 weist einen Coaleszer 18 auf, wobei auch denkbar ist, dass das Filtermaterial 10 coaleszierend ausgebildet ist. Ein derartiger Coaleszer 18 scheidet dabei aerosol mitgeführtes Hydraulikmittel ab.

Betrachtet man die untere Endscheibe 8 des Ringfilterelements 7, so kann man erkennen, dass dieses einen hochgezogenen Außenrand 19 sowie einen im Vergleich dazu niedrigeren, aber ebenfalls hochgezogenen Innenrand 20 besitzt. In dem Rand 17, der den Ventilkörper 15 und den Verbindungskanal 11 ringförmig umgibt, sind zudem erfindungsgemäß Öffnungen 21 vorgesehen, die einen Rückfluss vom am Ringfilterelement 7 bzw. an dessen Coaleszer 18 abgeschiedenem Hydraulikmittel 28 über den Verbindungskanal 11 in den Hydrauliktank 2 ermöglichen. Herrscht bspw. im Hydrauliktank 2 im Verhältnis zur Umgebung ein Überdruck, so führt dies zu einem Schließen des Ventilkörpers 15 und bei entsprechend hohem Überdruck zu einem Abheben des Ventiltellers 14 von dessen Ventilsitz 13, wodurch der im Hydrauliktank 2 aufgebaute Überdruck nach außen abgeleitet und abgebaut werden kann. Hierbei steht jedoch zu befürchten, dass aerosol gelöstes Hydraulikmittel bzw. Hydrauliköl mitgeführt wird, welches anschließend beim Durchdringen des Ringfilterelements 7 am Coaleszer 18 oder am coaleszierenden Filtermaterial 10 abgeschieden wird. Im Ringfilterelement 7 bzw. im Bereich der unteren Endscheibe 8 kann dabei jedoch nur so viel abgeschiedenes Hydraulikmittel 28 bzw. Hydrauliköl gesammelt werden, bis ein Pegel die Höhe des hochgezogenen Innenrandes 20 erreicht, woraufhin das abgeschiedene Hydrauliköl 28 den Innenrand 20 überwindet und über die Öffnungen 21 und den Ventilteller 14 nach unten in den Verbindungskanal 11 und darüber in den Hydrauliktank 2 zurückläuft. Mit der erfindungsgemäßen Druckausgleichseinrichtung 1 ist es somit nicht nur möglich, aerosol mitgeführtes Hydraulikmittel 28 abzuscheiden und zu sammeln, sondern anschließend auch wieder dem Hydraulikkreislauf zuzuführen, wodurch sowohl eine unerwünschte Kontamination der Umgebung mit Hydraulikmittel 28 als auch ein unnötiger Hydraulikmittelverbrauch verhindert werden können.

Um den Ventilteller 14 in seine Schließlage vorzuspannen, ist eine Federeinrichtung 22, hier in der Art einer Schraubenfeder, vorgesehen, die sich einen Ends am Deckel 6 und anderen Ends am Ventilteller 14 abstützt. Die als Schraubenfeder ausgebildete Federeinrichtung 22 umgreift dabei den Rand 17 und ist darüber bezüglich des Ventiltellers 14 positioniert. Selbstverständlich können zur weiteren Positionierung der Federeinrichtung 22 ringförmig angeordnete Zinnen 23 vorgesehen sein, die insbesondere ein Ausknicken der Schraubenfeder ausgebildeten Federeinrichtung 22 nach außen verhindern. Zwischen diesen einzelnen Zinnen 23 sind dabei ebenfalls Öffnungen 21' angeordnet, die einen Rückfluss von abgeschiedenem Hydraulikmittel 28 in den Hydrauliktank 2 ermöglichen.

Betrachtet man die Fig. 1 weiter, so kann man erkennen, dass am Innenrand 20 der unteren Endscheibe 8 eine Dichtlippe 24 angeordnet ist, die gegen eine Außenmantelfläche des Verbindungskanals 11 vorgespannt und dadurch eine innenliegende Hochseite von einer außenliegenden Reinseite trennt. In gleicher Weise kann eine ähnliche Dichtlippe 24' auch an der oberen Endscheibe 9 angeordnet sein und hier in eine deckelseitige Ringkontur 25 vorgespannt sein.

Betrachtet man den Verbindungskanal 11, so kann man erkennen, dass dieser einen trichterförmigen Abschnitt 26 sowie einen sich daran anschließenden rohrförmigen Abschnitt 27 besitzt. Der Ventilkörper 15 liegt dabei jedoch weder am trichterförmigen Abschnitt 26 noch am rohrförmigen Abschnitt 27 an, so dass rückströmendes Hydraulikmittel 28 ungehindert vom Coaleszer 18 über den Innenrand 20, den Ventilteller 14 und die Öffnungen 21 durch den Verbindungskanal 11 in dem Hydrauliktank 2 rückströmen kann. Außen am Verbindungskanal 11 ist dabei ein Außengewinde 29 angeordnet, über welches die Druckausgleichseinrichtung 1 in ein komplementär dazu ausgebildetes und an der Druckausgleichsöffnung 3 des Hydrauliktanks 2 angeordnetes Innengewinde 30 einschraubbar ist. Hierdurch kann insbesondere die Montage bzw. die Demontage der erfindungsgemäßen Druckausgleichseinrichtung 1 vergleichsweise einfach gestaltet werden.

Mit der erfindungsgemäßen Druckausgleichseinrichtung 1 ist es somit erstmals möglich, nicht nur einen pneumatischen Druckausgleich an einem Hydrauliktank 2 eines Hydrauliksystems vergleichsweise einfach und zuverlässig zu realisieren, sondern zugleich auch aerosol mitgeführtes Hydraulikmittel 28 abzuscheiden, zu sammeln und dem Hydraulikkreislauf wieder zuzuführen, wodurch eine nicht zu unterschätzende Ressourcenschonung erreicht werden kann.

## Patentansprüche

1. Druckausgleichseinrichtung (1) zum pneumatischen Druckausgleich eines Hydrauliktanks (2),
- mit einem eine Konsole (5) und einen topfförmigen Deckel (6) aufweisenden Gehäuse (4),
- mit einem in dem Gehäuse (4) angeordneten Ringfilterelement (7) mit einer unteren und einer oberen Endscheibe (8,9), die ein dazwischen angeordnetes Filtermaterial (10) stirnseitig begrenzen,
**dadurch gekennzeichnet,**
- **dass** die Konsole (5) einen zentralen Verbindungskanal (11) aufweist, der kommunizierend mit dem Hydrauliktank (2) verbindbar ist,
- **dass** im Bereich des Verbindungskanals (11) ein Druckausgleichsventil (12) vorgesehen ist, welches zumindest bei einem definierten Überdruck in eine Auslassrichtung öffnet,
- **dass** das Ringfilterelement (7) einen Coaleszer (18) aufweist oder das Filtermaterial coaleszierend ausgebildet ist,
- **dass** das Druckausgleichsventil (12) einen gegen einen zugehörigen, konsolenseitigen Ventilsitz (13) vorgespannten Ventilteller (14) mit einem zentral angeordneten Ventilkörper (15) aufweist, der über Kragarme (16) mit einem hochgezogenen Rand (17) am Ventilteller (14) gehalten ist,
- **dass** in dem Rand (17) Öffnungen (21) vorgesehen sind, die einen Rückfluss von am Ringfilterelement (7) abgeschiedener Flüssigkeit über den Verbindungskanal (11) in den Hydrauliktank (2) ermöglicht,
- **dass** die untere Endscheibe (8) des Ringfilterelements (7) einen hochgezogenen Außenrand (19) und einen im Vergleich dazu niedrigeren, hochgezogenen Innenrand (20) weist.

2. Druckausgleichseinrichtung nach Anspruch 1,
**dadurch gekennzeichnet,**
**dass** eine Federeinrichtung (22) vorgesehen ist, die sich einen Ends am Deckel (6) und anderen Ends am Ventilteller (14) abstützt und diesen gegen den konsolenseitigen Ventilsitz (13) vorspannt.

3. Druckausgleichseinrichtung nach Anspruch 2,
**dadurch gekennzeichnet,**
**dass** die Federeinrichtung (22) als Schraubenfeder ausgebildet ist und den Rand (17) am Ventilteller (14) umgreift.

4. Druckausgleichseinrichtung nach einem der vorhergehenden Ansprüche,
**dadurch gekennzeichnet,**
**dass** am Innenrand (20) der unteren Endscheibe (8) eine Dichtlippe (24) angeordnet ist, die gegen eine Außenmantelfläche des Verbindungskanals (11) vorgespannt ist.

5. Druckausgleichseinrichtung nach einem der Ansprüche 1 bis 4,
**dadurch gekennzeichnet,**
**dass** der Verbindungskanal (11) einen trichterförmigen Abschnitt (25) und einen sich daran anschließenden rohrförmigen Abschnitt (26) aufweist.

6. Druckausgleichseinrichtung nach einem der Ansprüche 1 bis 5,
**dadurch gekennzeichnet,**
**dass** außen am Verbindungskanal (11) ein Außengewinde (29) angeordnet ist.

7. Druckausgleichseinrichtung nach Anspruch 5 oder 6,
**dadurch gekennzeichnet,**
**dass** der Ventilsitz (13) oben am trichterförmigen Abschnitt (26) angeordnet ist.

8. Hydrauliktank (2) zur Bevorratung einer Hydraulikflüssigkeit,
- mit wenigstens einer Druckausgleichsöffnung (3),
- mit wenigstens einer einer solchen Druckausgleichsöffnung (3) zugeordneten Druckausgleichseinrichtung (1) nach einem der Ansprüche 1 bis 7.

9. Hydrauliktank nach Anspruch 9,
**dadurch gekennzeichnet,**
**dass** an der Druckausgleichöffnung (3) ein komplementär zum Außengewinde (29) der Druckausgleichseinrichtung (1) ausgebildetes Innengewinde (30) angeordnet ist.

## Claims

1. Pressure equalising device (1) for pneumatic pressure equalisation of a hydraulic tank (2),
- with a housing (4) having a mounting (5) and a pot-shaped cover (6),
- with a ring filter element (7) arranged in the housing (4) with a lower and an upper end plate (8,9), which limit a filter material (10) arranged between them on the front end, **characterised in that**
- the mounting (5) has a central connecting channel (11), which is connectable communicatingly with the hydraulic tank (2),
- there is provided in the region of the connecting channel (11) a pressure equalisation valve (12), which opens into an outlet direction at least when there is a defined positive pressure,
- the ring filter element (7) has a coalescer (18) or the filter material is formed to be coalescent,
- the pressure equalisation valve (12) has a valve disc (14) pretensioned against an associated valve seat (13) on the mounting side with a centrally arranged valve body (15), which is held on the valve disc (14) by way of cantilevers (16) with a raised edge (17),
- openings (21) are provided in the edge (17), which enables fluid separated off on the ring filter element (7) to flow back via the connecting channel (11) into the hydraulic tank (2),
- the lower end plate (8) of the ring filter element (7) has a raised outer edge (19) and, in comparison with that, a lower, raised inner edge (20).

2. Pressure equalising device according to claim 1, **characterised in that** a spring device (22) is provided, which is supported at one end against the cover (6) and at the other end against the valve disc (14) and pretensions the latter against the valve seat (13) on the mounting side.

3. Pressure equalising device according to claim 2, **characterised in that** the spring device (22) is formed as helical spring and grips the edge (17) on the valve disc (14).

4. Pressure equalising device according to any one of the preceding claims, **characterised in that** a sealing lip (24) is arranged on the inner edge (20) of the lower end plate (8), said sealing lip being pretensioned against an outer-casing surface of the connecting channel (11).

5. Pressure equalising device according to any one of claims 1 to 4, **characterised in that** the connecting channel (11) has a funnel-shaped section (25) and an immediately following tubular section (26).

6. Pressure equalising device according to any one of claims 1 to 5, **characterised in that** an external thread (29) is arranged on the outside of the connecting channel (11).

7. Pressure equalising device according to claim 5 or 6, **characterised in that** the valve seat (13) is arranged on the top of the funnel-shaped section (26).

8. Hydraulic tank (2) for the storing of a hydraulic fluid,
- with at least one pressure equalisation opening (3),
- with at least one pressure equalising device (1) according to any one of claims 1 to 7 assigned to such a pressure equalisation opening (3).

9. Hydraulic tank according to claim 8, **characterised in that** an internal thread (30) formed as a complement to the external thread (29) of the pressure equalising device (1) is arranged on the pressure equalisation opening (3).

## Revendications

1. Dispositif de compensation de pression (1) pour la compensation de pression pneumatique d'un réservoir hydraulique (2),
- avec un boîtier (4) présentant une console (5) et un couvercle en forme de pot (6),
- avec un élément filtrant annulaire (7) agencé dans le boîtier (4) avec un disque d'extrémité inférieur et un disque d'extrémité supérieur (8, 9), qui délimitent côté frontal un matériau filtrant (10) agencé entre eux,
**caractérisé en ce**
- **que** la console (5) présente un canal de liaison central (11), qui peut être relié en communication avec le réservoir hydraulique (2),
- **qu'**une soupape de compensation de pression (12) est prévue dans la zone du canal de liaison (11),, laquelle s'ouvre au moins lors d'une surpression définie dans un sens de sortie,
- **que** l'élément filtrant annulaire (7) présente un coalesceur (18) ou le matériau filtrant est réalisé de manière coalescente,
- **que** la soupape de compensation de pression (12) présente une tête de soupape (14) précontrainte contre un siège de soupape (13) afférent côté console avec un corps de soupape (15) agencé au centre, qui est retenu par le biais de cantilevers (16) avec un bord relevé (17) au niveau de la tête de soupape (14),
- **que** des ouvertures (21) sont prévues dans le bord (17), qui permet un reflux de fluide séparé au niveau de l'élément filtrant annulaire (7) dans le réservoir hydraulique (2) par le biais du canal de liaison (11),
- **que** le disque d'extrémité inférieur (8) de l'élément filtrant annulaire (7) présente un bord extérieur relevé (19) et un bord intérieur relevé (20) inférieur à celui-ci.

2. Dispositif de compensation de pression selon la revendication 1,
**caractérisé en ce**
**qu'**un dispositif à ressort (22) est prévu, qui s'appuie à une extrémité sur le couvercle (6) et à l'autre extrémité sur la tête de soupape (14) et la précontraint contre le siège de soupape côté console (13).

3. Dispositif de compensation de pression selon la revendication 2,
**caractérisé en ce**
**que** le dispositif à ressort (22) est réalisé en tant que ressort hélicoïdal et entoure le bord (17) au niveau de la tête de soupape (14).

4. Dispositif de compensation de pression selon l'une quelconque des revendications précédentes,
**caractérisé en ce**
**qu'**une lèvre d'étanchéité (24), qui est précontrainte contre une surface d'enveloppe extérieure du canal de liaison (11), est agencée au niveau du bord intérieur (20) du disque d'extrémité inférieur (8).

5. Dispositif de compensation de pression selon l'une quelconque des revendications 1 à 4,
**caractérisé en ce**
**que** le canal de liaison (11) présente une section en forme d'entonnoir (25) et une section tubulaire (26) s'y raccordant.

6. Dispositif de compensation de pression selon l'une quelconque des revendications 1 à 5,
**caractérisé en ce**
**qu'**un filet extérieur (29) est agencé à l'extérieur du canal de liaison (11).

7. Dispositif de compensation de pression selon la revendication 5 ou 6,
**caractérisé en ce**
**que** le siège de soupape (13) est agencé en haut au niveau de la section en forme d'entonnoir (26).

8. Réservoir hydraulique (2) pour le stockage d'un fluide hydraulique,
- avec au moins une ouverture de compensation de pression (3),
- avec au moins un dispositif de compensation de pression (1) associé à une telle ouverture de compensation de pression (3) selon l'une quelconque des revendications 1 à 7.

9. Réservoir hydraulique selon la revendication 8,
**caractérisé en ce**
**qu'**un filetage intérieur (30) réalisé de manière complémentaire au filetage extérieur (29) du dispositif de compensation de pression (1) est agencé au niveau de l'ouverture de compensation de pression (3).
